# EUROPEAN PATENT APPLICATION

(11) **EP 4 712 146 A1**
(43) Date of publication of application: **18.03.2026**
(21) Application number: 24803616.2
(22) Date of filing: 19.04.2024
(51) Int. Cl.: H01M 4/04

(54) **ELECTRODE SHEET PROCESSING DEVICE PROVIDED WITH MULTIPLE DETECTION MEMBERS AND ELECTRODE SHEET PROCESSING METHOD USING SAME**

(30) Priority: 10.05.2023 KR 20230060457
(71) Applicant: LG Energy Solution, Ltd., Seoul 07335 (KR)
(72) Inventor: PARK, Kyoung Do, Daejeon 34122 (KR)
(74) Representative: Goddar, Heinz J.
(86) International application number: PCT/KR2024/005310
(87) International publication number: WO 2024/232561

(57) **Abstract**

Disclosed are an electrode sheet machining apparatus having a plurality of detection members and an electrode sheet machining method using the same, and more particularly an electrode sheet machining apparatus including an unwinder unit configured to supply an electrode sheet, a notching unit configured to notch the electrode sheet, a drying unit configured to dry the notched electrode sheet, a rewinder unit configured to wind the dried electrode sheet, and a second detection member located between the drying unit and the rewinder unit, configured to inspect a state of the electrode sheet prior to winding, and an electrode sheet machining method using the same.

## Description

### [Technical Field]

This application claims the benefit of priority to Korean Patent Application No. 2023-0060457 filed on May 10, 2023, the disclosure of which is incorporated herein by reference in its entirety.

The present invention relates to an electrode sheet machining apparatus having a plurality of detection members and an electrode sheet machining method using the same, and more particularly to an electrode sheet machining apparatus having a plurality of detection members capable of reducing defects of electrode sheets and an electrode sheet machining method using the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

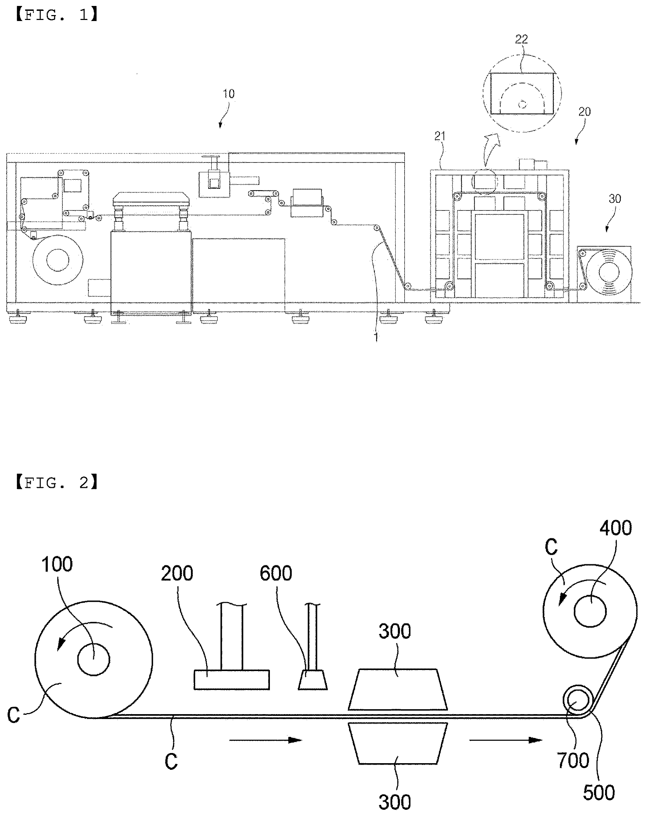

Meanwhile, referring to FIG. 1, which is a side view of a conventional notching apparatus for secondary batteries, the notching apparatus includes a notching unit 10 configured to cut an electrode sheet 1, a drying unit 20 having a heating body 21 and a lamp 22 configured to emit heat, and a collection unit 30 configured to wind the dried electrode sheet 1.

After the drying process by the drying unit 20, the overall length, the shoulder line, the surface state, etc. of the electrode may change due to drying, and during transfer of the dried electrode sheet 1, the electrode sheet 1 may be distorted and may not be properly wound on the collection unit 30.

However, the conventional notching apparatus for secondary batteries is not properly provided with an inspection device capable of solving the aforementioned problems, and therefore defective electrodes are likely to be produced.

### (Prior Art Document)

(Patent Document 1) Korean Patent Application Publication No. 2019-0133530

### [Disclosure]

### [Technical Problem]

The present invention has been made in view of the above problems, and it is an object of the present invention to provide an electrode sheet machining apparatus having a plurality of detection members capable of inspecting whether an electrode sheet is defective, thereby minimizing the production of defective electrodes, and an electrode sheet machining method using the same.

### [Technical Solution]

An electrode sheet machining apparatus according to the present invention to accomplish the above object includes an unwinder unit (100) configured to supply an electrode sheet (S), a notching unit (200) configured to notch the electrode sheet (S), a drying unit (300) configured to dry the notched electrode sheet (S), a rewinder unit (400) configured to wind the dried electrode sheet (S), and a second detection member (700) is located between the drying unit (300) and the rewinder unit (400), configured to inspect the state of the electrode sheet (S) prior to winding.

Also, in the electrode sheet machining apparatus according to the present invention, a guide roller (500) configured to change the movement direction of the electrode sheet (S) may be located in the vicinity of the rewinder unit (400).

Also, in the electrode sheet machining apparatus according to the present invention, the second detecting member (700) may be received in the guide roller (500).

Also, in the electrode sheet machining apparatus according to the present invention, the guide roller (500) may include a second drum (510) having a space defined therein and a pair of second shafts (520) located at both ends of the second drum (510), and the second drum (510) may be made of a transparent material.

Also, in the electrode sheet machining apparatus according to the present invention, the transparent material may include at least one of glass, quartz, acrylic, polyethylene terephthalate, polypropylene, polyethylene, polyamide, or polystyrene.

Also, in the electrode sheet machining apparatus according to the present invention, the second detection member (700) may include a detector body (710) located in the space of the second drum (510) and a third shaft (720) located at both ends of the detector body (710).

Also, in the electrode sheet machining apparatus according to the present invention, the detector body (710) may be a bar-shaped vision camera.

Also, in the electrode sheet machining apparatus according to the present invention, the detector body (710) may capture information of at least one of the overall length, the shoulder line, the tab height, or the surface state of the electrode sheet (S).

Also, in the electrode sheet machining apparatus according to the present invention, the detector body (710) may have a length greater than the width of the electrode sheet (S).

Also, in the electrode sheet machining apparatus according to the present invention, the third shaft (720) may extend through the interior of the second shaft (520) such that the guide roller (500) and the second detection member (700) can be driven independently.

Also, in the electrode sheet machining apparatus according to the present invention, a first detection member (600) may be further provided between the unwinder unit (100) and the drying unit (300).

Also, in the electrode sheet machining apparatus according to the present invention, a third detection member (800) configured to capture the state of the electrode sheet (S) wound on the rewinder unit (400) may be further provided.

In addition, an electrode sheet machining method according to the present invention includes a first step of supplying an electrode sheet through an unwinder unit, a second step of notching the supplied electrode sheet, a third step of drying the notched electrode sheet, and a fourth step of winding the dried electrode sheet through a rewinder unit, and a step of inspecting the state of the dried electrode sheet (S) between the third step and the fourth step.

Also, in the electrode sheet machining method according to the present invention, the step of inspecting the state of the electrode sheet (S) may include acquiring information of at least one of the overall length, the shoulder line, the tab height, or the surface of the electrode sheet (S).

Also, in the electrode sheet machining method according to the present invention, the electrode sheet machining method may be suspended when the acquired information deviates from a set value.

### [Advantageous Effects]

As is apparent from the above description, an electrode sheet machining apparatus having a plurality of detection members according to the present invention and an electrode sheet machining method using the same have the merit that the detection member is provided between a drying unit and a rewinder unit, whereby it is possible to detect defects that occur after a drying process.

In addition, the electrode sheet machining apparatus having the plurality of detection members according to the present invention and the electrode sheet machining method using the same have the advantage that the detection member is received in a guide roller, whereby it is not necessary to provide additional space for installing the detection member.

### [Description of Drawings]

FIG. 1 is a side view of a conventional notching apparatus for secondary batteries.
FIG. 2 is a side view of an electrode sheet machining apparatus according to a first preferred embodiment of the present invention.
FIG. 3 is a perspective view showing winding of an electrode sheet notched by the electrode sheet machining apparatus according to the first preferred embodiment of the present invention.
FIG. 4 is an enlarged perspective view of a guide roller of the electrode sheet machining apparatus according to the first preferred embodiment of the present invention in the state in which a detection member is received in the guide roller.
FIG. 5 is a sectional view of the guide roller shown in FIG. 4 ((a) is a sectional view in direction A-A and (b) is a sectional view in direction B-B).
FIG. 6 is a side view of an electrode sheet machining apparatus according to a second preferred embodiment of the present invention.
FIG. 7 is a side view of an electrode sheet machining apparatus according to a third preferred embodiment of the present invention.
FIG. 8 is a flowchart illustrating an electrode sheet machining method according to a preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an electrode sheet machining apparatus having a plurality of detection members according to the present invention and an electrode sheet machining method using the same will be described with reference to the accompanying drawings.

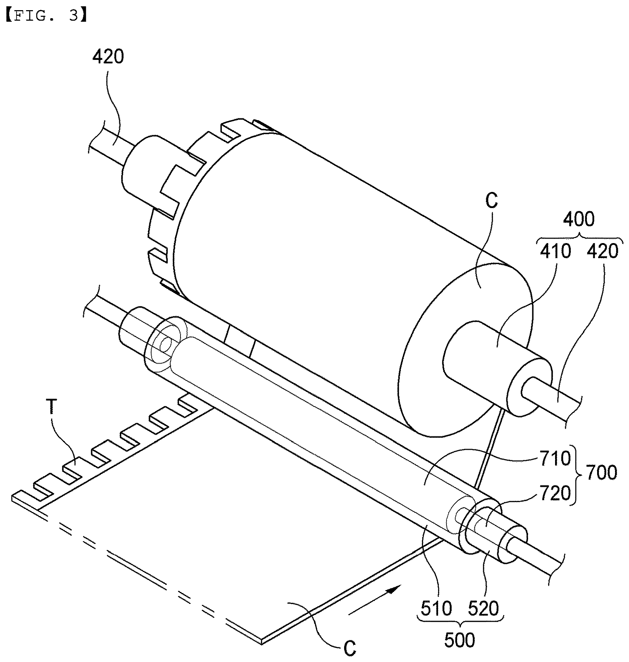

FIG. 2 is a side view of an electrode sheet machining apparatus according to a first preferred embodiment of the present invention, and FIG. 3 is a perspective view showing winding of an electrode sheet notched by the electrode sheet machining apparatus according to the first preferred embodiment of the present invention.

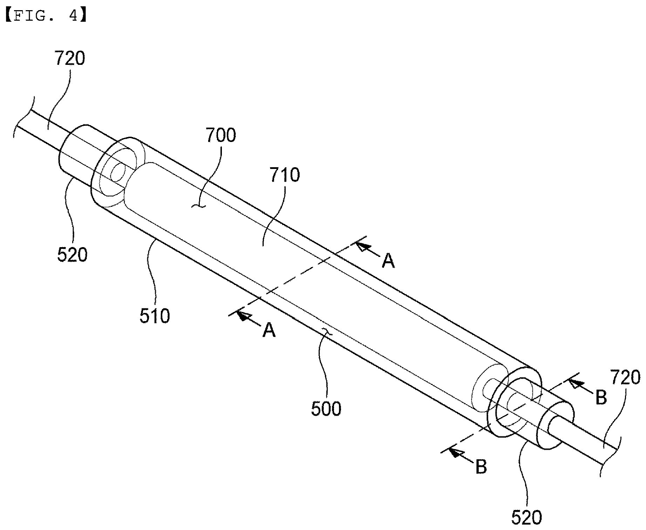

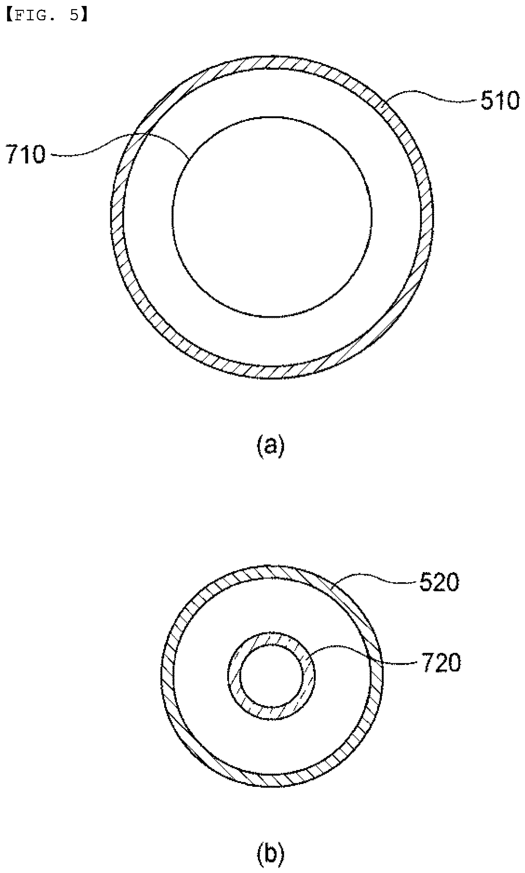

FIG. 4 is an enlarged perspective view of a guide roller of the electrode sheet machining apparatus according to the first preferred embodiment of the present invention in the state in which a detection member is received in the guide roller, and FIG. 5 is a sectional view of the guide roller shown in FIG. 4 ((a) is a sectional view in direction A-A and (b) is a sectional view in direction B-B).

Referring to FIGs. 2 to 5, the electrode sheet machining apparatus according to the first preferred embodiment of the present invention may include an unwinder unit 100, a notching unit 200, a drying unit 300, a rewinder unit 400, a guide roller 500, a first detection member 600, and a second detection member 700.

The unwinder unit 100 is a unit configured to supply an electrode sheet to be machined.

In one example, the unwinder unit 100 may be configured to unwind an electrode sheet S wound on a columnar drum from the outermost end thereof and to supply the unwound electrode sheet S to the notching unit located in front thereof.

Here, the electrode sheet S may be a negative electrode sheet or a positive electrode sheet manufactured by applying a slurry mixture of an active material and a binder to an electrode current collector.

Specifically, the negative electrode sheet is manufactured by applying a slurry mixture of a negative electrode active material and a binder to a negative electrode current collector.

As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

The positive electrode sheet is manufactured by applying a slurry mixture of a positive electrode active material and a binder to a positive electrode current collector.

The positive electrode active material may be a layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ however, the present invention is not limited thereto.

The notching unit 200, which is located in front of the unwinder unit 100, is a unit configured to notch an uncoated portion, to which no active material is applied, of the electrode sheet S transferred and supplied by the unwinder unit 100 to form an electrode tab T.

The notching unit 200 may be a punching device configured to cut the uncoated portion in the shape of the electrode tab by punching or a laser machining device configured to cut the uncoated portion in the shape of the electrode tab by radiating a laser to the uncoated portion; however, the present invention is not limited thereto as long as the electrode tab can be formed at the uncoated portion.

Although not shown in the figures, it is obvious that a separate driving means configured to rotate the unwinder unit 100, such as a motor, must be provided.

The drying unit 300, which is located in front of the notching unit 200, is configured to dry the electrode sheet S notched by the notching unit 200 while being transferred, and may heat the electrode sheet S such that the electrode current collect and the electrode active material can be more strongly bonded and fixed to each other.

Here, the drying unit 300 may be provided therein with a hot air blower configured to supply hot air to the electrode sheet S or an infrared lamp configured to apply heat to the electrode sheet by radiation of infrared light; however, the present invention is not limited thereto as long as heat can be applied to the electrode sheet S.

The rewinder unit 400, which is located in front of the drying unit 300, is configured to rewind the electrode sheet S dried while passing through the drying unit 300, and may include a first drum 410 and a first shaft 420.

The first drum 410, which is columnar, allows the electrode sheet S to be wound thereon in tight contact therewith, and the first shaft 420 is formed at one end, more preferably both ends, of the first drum 410.

Although not shown in the figures, a separate driving means configured to rotate the first drum 410, such as a motor, is connected to the first shaft 420.

The guide roller 500 is located in the vicinity of the rewinder unit 400, and is configured to apply a predetermined pressure to the electrode sheet S that is wound on the first drum 410 to prevent meandering of the electrode sheet S and to change the movement direction of the electrode sheet.

In the first embodiment of the present invention, the guide roller 500 is located under the rewinder unit 400, and therefore the movement direction of the dried electrode sheet S is changed such that the electrode sheet is transferred upward from the guide roller 500.

The guide roller 500 may include a second drum 510 and a second shaft 520.

The second drum 510, which is columnar, is disposed in tight contact with an upper surface of the electrode sheet S that is transferred, whereby the electrode sheet S is directed to the rewinder unit 400.

Here, the second drum 510 is provided therein with a space, in which the second detection member 700 is received.

In order for the second detection member 700, which is received in the second drum, to capture various kinds of information of the electrode sheet S and to acquire results, a part of the entirety of the second drum 510 is preferably made of a transparent material. In one example, the material of the second drum 510 may include at least one of glass, quartz, acrylic, polyethylene terephthalate, polypropylene, polyethylene, polyamide, and polystyrene; however, the present invention is not limited thereto as long as the material is transparent while remaining in tight contact with the electrode sheet S.

Here, the second shaft 520 is formed in the shape of a hollow cylinder in order to receive a third shaft 720 of the second detection member 700.

The first detection member 600 is located between the notching unit 200 and the drying unit 300 to inspect the notched electrode sheet S. In one example, the first detection member may be a vision camera.

Here, the first detection member 600 captures at least one piece of information of the notched electrode sheet S, such as the overall length, the shoulder line, the tab height, and the surface state, to determine whether the notched electrode sheet S satisfies a set reference value.

The second detection member 700 is located between the drying unit 300 and the rewinder unit 400 to inspect the electrode sheet S in a dried state, and may include a detector body 710 and a third shaft 720.

Specifically, the detector body 710 inspects the electrode sheet S that is transferred to the first drum 410 in the state in which the detector body 710 is spaced apart from the second drum 210 by a predetermined distance so as not to be in contact with an inner surface of the second drum 210 while being located in the space of the second drum 210 of the guide roller 500.

Here, the length of the detector body 710 is preferably greater than or equal to the width of the electrode sheet S that is transferred. The reason for this is that, if the length of the detector body 710 is less than the width of the electrode sheet S, a part of the electrode sheet may not be inspected by the detector body 710.

The detector body 710 that performs the above function may be a bar-shaped vision camera, and may inspect at least one piece of the following information: the overall length, the shoulder line, the tab height, and the surface state of the electrode sheet S.

The third shaft 720 may be formed in the shape of a long bar and is located at each end of the detector body 710 to support and fix the detector body 710.

In particular, the third shaft 720 is spaced apart from an inner surface of the second shaft 520 of the guide roller 500 by a predetermined distance so as not to be in contact with the second shaft 520 while extending through the interior of the second shaft 520.

Therefore, even though the second detection member 700 is received in the guide roller 500, the second detection member 700 and the guide roller 500 may be moved independently. In other words, when the electrode sheet S is continuously moved toward the rewinder unit 400, it is possible to perform control such that the guide roller 500 is rotated while the second detection member 700 is not rotated.

When the second detection member 700 is received in the guide roller 500, as described above, there is the advantage that no additional space is required for installation of the second detection member 700.

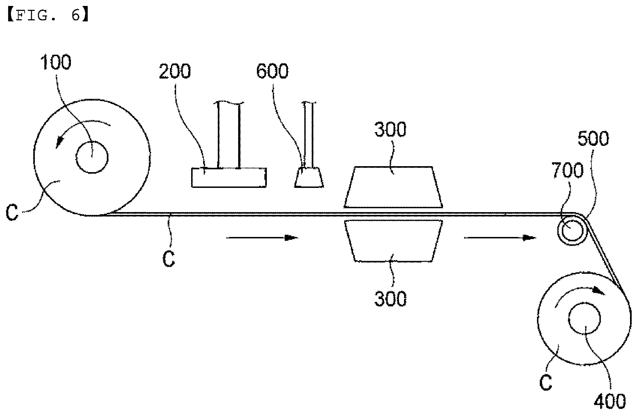

FIG. 6 is a side view of an electrode sheet machining apparatus according to a second preferred embodiment of the present invention.

Referring to FIG. 6, the electrode sheet machining apparatus according to the second preferred embodiment of the present invention is identical to the electrode sheet machining apparatus according to the first embodiment described with reference to FIGs. 2 to 6, except for the position of the guide roller and the rewinder unit, and therefore a description of the same configuration will be omitted.

In the electrode sheet machining apparatus according to the second embodiment, the rewinder unit 400 is located under the electrode sheet S that is transferred, and therefore the guide roller 500 is in tight contact with a lower surface of the electrode sheet S such that the electrode sheet S can be moved downward.

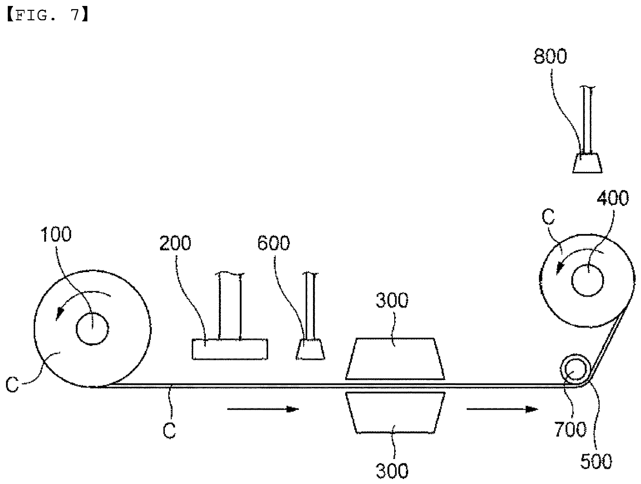

FIG. 7 is a side view of an electrode sheet machining apparatus according to a third preferred embodiment of the present invention.

Referring to FIG. 7, the electrode sheet machining apparatus according to the third preferred embodiment of the present invention is identical to the electrode sheet machining apparatus according to the first embodiment described with reference to FIGs. 2 to 6, except that a third detection member is further provided, and therefore a description of the same configuration will be omitted.

The electrode sheet machining apparatus according to the third embodiment is further provided with a third detection member 800 configured to inspect the electrode sheet S wound on the first drum 410.

The third detection member 800 may be the same vision camera as the first detection member 600, and inspects crumpling of the uncoated portion of the electrode tab T during or after winding of the electrode sheet S on the first drum 410.

Of course, the third detection member 800 may also acquire at least one piece of the following information: the overall length, the shoulder line, the tab height, and the surface state of the electrode sheet S by capturing, in the same manner as the first detection member 600 and the second detection member 700.

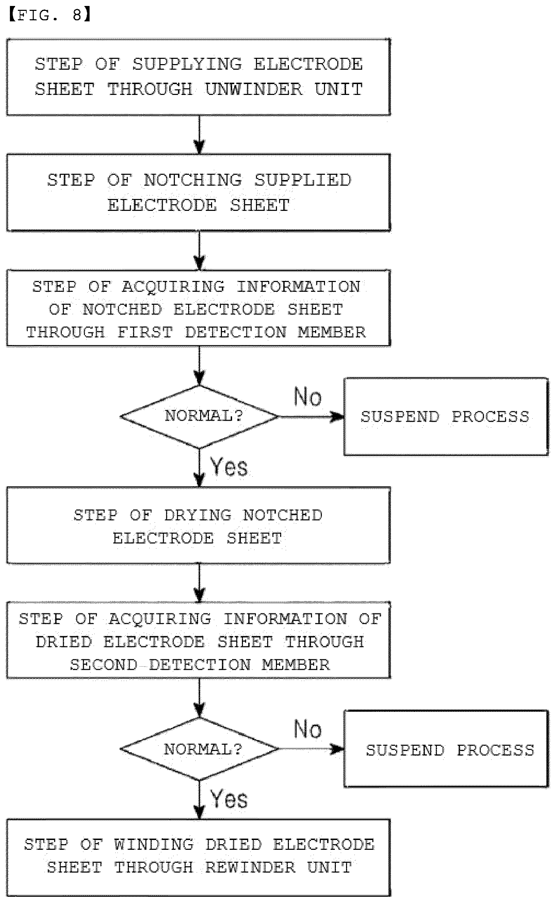

FIG. 8 is a flowchart illustrating an electrode sheet machining method according to a preferred embodiment of the present invention.

A method of machining an electrode sheet using the electrode sheet machining apparatus according to the first embodiment or the second embodiment may include a first step of supplying an electrode sheet through the unwinder unit, a second step of notching the supplied electrode sheet, a third step of drying the notched electrode sheet, and a fourth step of winding the dried electrode sheet through the rewinder unit.

The first step of supplying the electrode sheet through the unwinder unit is a step in which the unwinder unit is rotated in a direction of unwinding the electrode sheet to supply the electrode sheet in a direction toward the notching unit.

The second step of notching the supplied electrode sheet is a step of forming an electrode tab at an uncoated portion of the electrode sheet supplied from the unwinder unit using notching unit.

Meanwhile, it is preferable to perform an inspection step of acquiring at least one piece of the following information: the overall length, the shoulder line, the tab height, and the surface state of the notched electrode sheet using the first detection member, such as a vision camera.

At this time, the process may be suspended if the information acquired from the first detection member deviates from a set value.

The third step of drying the notched electrode sheet is a step in which the notched electrode sheet is transferred and dried with heat applied by the drying unit to improve the adhesion between the electrode current collector and the electrode active material.

The fourth step of winding the dried electrode sheet through the rewinder unit is a step of winding the dried electrode sheet on the first drum of the rewinder unit.

Meanwhile, it is advantageous to further perform a step of inspecting the state of the dried electrode sheet using the second detection member, such as a vision camera, received in the guide roller located in the vicinity of the rewinder unit before the fourth step.

In addition, the process may be suspended if at least one piece of the following information: the overall length, the shoulder line, the tab height, and the surface state of the dried electrode sheet deviates from the set value.

Those skilled in the art to which the present invention pertains will appreciate that various applications and modifications are possible within the category of the present invention based on the above description.

### (Description of Reference Symbols)

100: Unwinder unit
200: Notching unit
300: Drying unit
400: Rewinder unit
410: First drum 420: First shaft
500: Guide roller
510: Second drum 520: Second shaft
600: First detection member
700: Second detector member
710: Detector body 720: Third shaft
800: Third detection member
S: Electrode sheet
T: Electrode tab

## Claims

1. An electrode sheet machining apparatus comprising:
an unwinder unit configured to supply an electrode sheet;
a notching unit configured to notch the electrode sheet;
a drying unit configured to dry the notched electrode sheet;
a rewinder unit configured to wind the dried electrode sheet;
a second detection member located between the drying unit and the rewinder unit, configured to inspect a state of the electrode sheet prior to winding.

2. The electrode sheet machining apparatus according to claim 1, wherein a guide roller configured to change a movement direction of the electrode sheet is located in a vicinity of the rewinder unit.

3. The electrode sheet machining apparatus according to claim 2, wherein the second detecting member is received in the guide roller.

4. The electrode sheet machining apparatus according to claim 3, wherein
the guide roller comprises a second drum having a space defined therein and a pair of second shafts located at both ends of the second drum, and
the second drum is made of a transparent material.

5. The electrode sheet machining apparatus according to claim 4, wherein the transparent material comprises at least one of glass, quartz, acrylic, polyethylene terephthalate, polypropylene, polyethylene, polyamide, or polystyrene.

6. The electrode sheet machining apparatus according to claim 4, wherein the second detection member comprises a detector body located in the space of the second drum and a third shaft located at both ends of the detector body.

7. The electrode sheet machining apparatus according to claim 6, wherein the detector body is a bar-shaped vision camera.

8. The electrode sheet machining apparatus according to claim 7, wherein the detector body acquires information of at least one of an overall length, a shoulder line, a tab height, or a surface of the electrode sheet.

9. The electrode sheet machining apparatus according to claim 7, wherein the detector body has a length greater than a width of the electrode sheet.

10. The electrode sheet machining apparatus according to claim 6, wherein the third shaft extends through an interior of the second shaft such that the guide roller and the second detection member can be driven independently.

11. The electrode sheet machining apparatus according to claim 1, further comprising:
a first detection member between the unwinder unit and the drying unit.

12. The electrode sheet machining apparatus according to claim 11, further comprising:
a third detection member configured to inspect a state of the electrode sheet wound on the rewinder unit.

13. An electrode sheet machining method comprising:
a first step of supplying an electrode sheet through an unwinder unit;
a second step of notching the supplied electrode sheet;
a third step of drying the notched electrode sheet;
a fourth step of winding the dried electrode sheet through a rewinder unit; and
a step of inspecting a state of the dried electrode sheet between the third step and the fourth step.

14. The electrode sheet machining method according to claim 13, wherein the step of inspecting the state of the electrode sheet comprises acquiring information of at least one of an overall length, a shoulder line, a tab height, or a surface of the electrode sheet.

15. The electrode sheet machining method according to claim 14, wherein the electrode sheet machining method is suspended when the acquired information deviates from a set value.
